# EUROPÄISCHE PATENTSCHRIFT

(11) **EP 1 577 627 B1**
(45) Veröffentlichungstag und Bekanntmachung des Hinweises auf die Patenterteilung: **27.08.2008**
(21) Anmeldenummer: 04290746.9
(22) Anmeldetag: 18.03.2004
(51) Int. Cl.: F28F 9/00, B60H 1/00

(54) **Kondensator für Klimaanlagen von Kraftfahrzeugen**
Condenser for vehicle air conditioner
Condensateur pour appareil de climatisation d'un véhicule

(43) Veröffentlichungstag der Anmeldung: 21.09.2005
(73) Patentinhaber: Behr France Hambach S.A.R.L., 57910 Hambach (FR)
(72) Erfinder: Bellott, Frederic, 67260 Sarre-Union (FR); Herbeth, Michel, 57430 Sarralbe (FR)
(74) Vertreter: Grauel, Andreas

(56) Entgegenhaltungen:
- EP-A- 1 439 367
- EP-B- 0 897 341
- US-A- 5 603 152
- PATENT ABSTRACTS OF JAPAN Bd. 1998, Nr. 02, 30. Januar 1998 (1998-01-30) -& JP 09 264694 A (ZEXEL CORP), 7. Oktober 1997 (1997-10-07)

## Beschreibung

Die Erfindung betrifft einen Kondensator für Klimaanlagen von Kraftfahrzeugen.

Kondensatoren für Kraftfahrzeugklimaanlagen bestehen aus Aluminium und werden beispielsweise durch Hartlöten in einem Lötofen hergestellt. Der Kondensator besteht aus einem aus Flachrohren und Wellrippen aufgebauten Netz und zwei seitlich angeordneten, mit den Flachrohren kommunizierenden Sammelrohren. Für die Zufuhr und Abfuhr von Kältemittel, welches die Sammelrohre und die Flachrohre durchströmt, sind Anschlussflansche vorgesehen, die an den Sammelrohren durch Löten befestigt sind. Derartige Anschlussflansche sind in der älteren Anmeldung der Anmelderin mit der Anmeldenummer EP 03 290 137.3 beschrieben. Der Kondensator wird meistens an einem Kühlmittelkühler im vorderen Motorraum des Kraftfahrzeuges befestigt, und zwar mittels Haltern, welche mit dem Kondensator verbunden sind, sei es durch Nieten oder sei es durch Löten. Eine Ausführungsform derartiger Halter ist in der älteren Anmeldung der Anmelderin mit dem Anmeldenummer EP 03 290 190.2 beschrieben. Halter, die an den Sammelrohren des Kondensators durch Löten befestigt werden, sind meistens einfach ausgebildete Teile, beispielsweise Stanz- oder Pressteile.

In der älteren Anmeldung der Anmelderin mit dem Anmeldenummer EP 03290190 ist ein Kondensator mit Anschlussflanschen und Haltern offenbart. Dabei sind einerseits zwei Flansche für den Eintritt und den Austritt des Kältemittels am Sammelrohr angelötet, und andererseits sind vier Halter ebenfalls durch Löten mit den Sammelrohren verbunden - dies sind insgesamt sechs Teile, welche vor dem Lötprozess mit den Sammelrohren gefügt und fixiert werden müssen, d. h. sechs Lötverbindungen - dies erfordert einen relativ hohen Fertigungsaufwand.

EP 0 897 341 offenbart einen Kondensator nach dem Oberbegriff des Anspruchs 1.

Es ist Aufgabe der vorliegenden Erfindung, einen Kondensator der eingangs genannten Art hinsichtlich des Fertigungsaufwandes zu vereinfachen mit dem Ziel, die Herstellungskosten zu senken.

Diese Aufgabe wird durch die Merkmale des Patenanspruches 1 gelöst. Erfindungsgemäß ist eine Kombination von Anschlussflansch und Halter in der Weise vorgesehen, dass der Halter am Flansch und der Flansch am Sammelrohr des Wärmeübertragers befestigt sind. Damit wird der Vorteil erreicht, dass pro Kondensator zwei Lötverbindungen für die Halter entfallen, da der Wärmeübertrager in der Regel zwei Anschlussflansche aufweist. Die Fertigung kann dadurch vereinfacht und die Herstellungskosten können gesenkt werden. Die Kombination von Anschlussflansch und Halter ist auch dann besonders vorteilhaft, wenn aus Einbaugründen im Fahrzeug die Positionen von Anschlussflansch und Halter sehr nahe zusammen liegen.

In vorteilhafter Ausgestaltung der Erfindung weist der Flansch einen Schlitz auf, in welchen der Halter einsetzbar und vorteilhafterweise fixierbar ist. Das Fixieren erfolgt dabei durch Verstemmen des Halters im Schlitz. Hierfür ist vorteilhafterweise neben dem Schlitz eine Lippe angeordnet, welche sich besonders einfach verstemmen lässt. Vorteilhaft hierbei ist, dass der Flansch mit dem durch Verstemmen fixierten Halter auf das Sammelrohr des Wärmeübertragers gesetzt und mit diesem zusammen verlötbar ist. Dadurch, dass der Halter am Flansch verlötet wird, entfällt die Lötverbindung eines Halters mit dem Sammelrohr, die unter Umständen zu Undichtigkeiten führen kann. Darüber hinaus besteht der Vorteil, dass der Anschlussflansch auch ohne Halter verwendbar ist, insofern ergeben sich für den erfindungsgemäßen Anschlussflansch mit Schlitz für den Halter zwei Verwendungsmöglichkeiten. Ein solcher Anschlussflansch lässt sich besonders vorteilhaft durch Extrusion herstellen, da hierbei gleichzeitig der Schlitz zur Aufnahme des Halters in Verbindung mit einer Lippe hergestellt werden kann.

Ein Ausführungsbeispiel der Erfindung ist in der Zeichnung dargestellt und wird im Folgenden näher beschrieben. Es zeigen
- Fig. 1: einen Kondensator mit an den Anschlussflanschen befestigten Haltern,
- Fig. 2: einen Flansch mit Halter als Einzelteil in perspektivischer Darstellung,
- Fig. 3: den Flansch gemäß Fig. 2 in einer anderen perspektivischen Darstellung und
- Fig. 4 ,: den Flansch mit Halter in einer Seitenansicht.

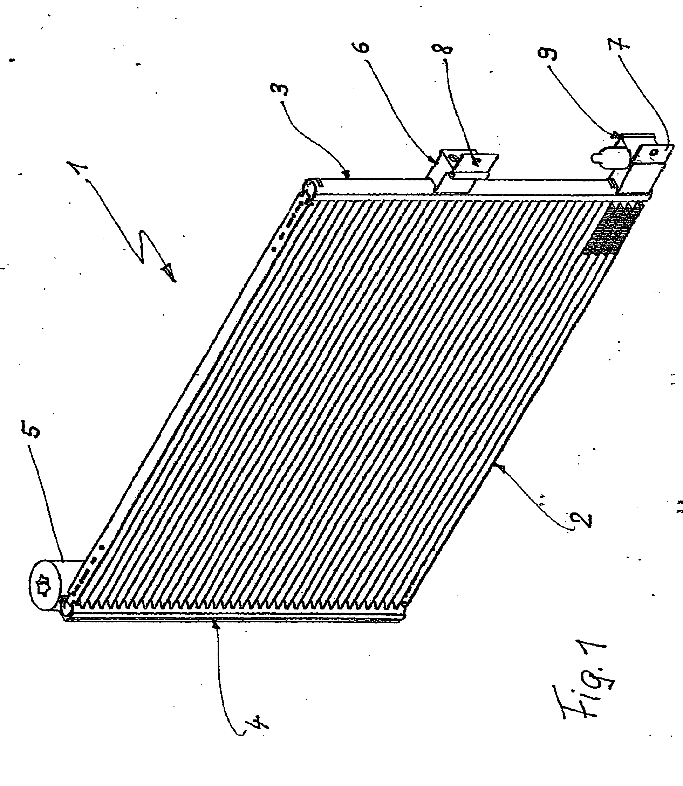

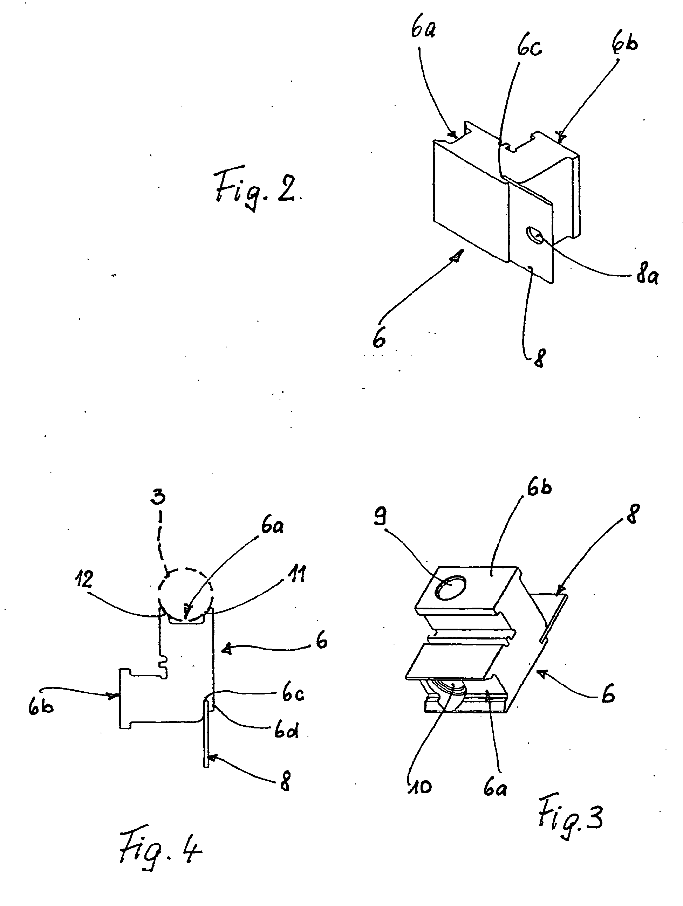

**Fig. 1** zeigt einen gelöteten Flachrohrkondensator 1 in Aluminiumbauweise für eine nicht dargestellte Klimaanlage eines Kraftfahrzeuges. Der Kondensator 1 weist, wie an sich bekannt, ein aus Flachrohren und Wellrippen gelötetes Netz 2 mit zwei seitlich angeordneten Sammelrohren 3, 4 auf. Am in der Zeichnung links angeordneten Sammelrohr 4 ist ein integrierter Sammler 5 angeordnet, der ebenfalls aus dem Stand der Technik bekannt ist. Am in der Zeichnung rechts gelegenen Sammelrohr 3 sind zwei Anschlussflansche 6, 7 befestigt, die jeweils einen Halter 8, 9 aufweisen. Der Kondensator 1, wird in der in der Zeichnung dargestellten Lage, d. h. mit etwa senkrecht angeordneten Sammelrohren 3, 4 im nicht dargestellten Motorraum des Kraftfahrzeuges angeordnet und vorzugsweise an einem ebenfalls nicht dargestellten Kühlmittelkühler des Kraftfahrzeuges befestigt. Für diese Befestigung sind unter anderem die Halter 8, 9 vorgesehen, die sich über die Anschlussflansche 6, 7 am Sammelrohr 3 abstützen. Über die Anschlussflansche 6, 7 ist der Kondensator 1 an einen nicht dargestellten Kältemittelkreislauf der Klimaanlage anschließbar. Der Anschlussflansch 6, der im Wesentlichen dem Anschlussflansch 7 entspricht, ist in den Fig. 2, 3 und 4 als Einzelteil dargestellt.

**Fig. 2** zeigt den Anschlussflansch 6 in perspektivischer Darstellung mit dem Halter 8, welcher mit dem winkelförmig ausgebildeten und durch Extrusion herstellbaren Anschlussflansch 6 verbunden ist. Der Anschlussflansch 6 weist eine Anschlussseite 6a für das hier nicht dargestellte Sammelrohr 3 und eine weitere Anschlussseite 6b für ein nicht dargestelltes Kältemittelrohr auf. Im Halter 8, der als flaches, gestanztes Blechteil hergestellt ist, ist eine Befestigungsbohrung 8a angeordnet. In dem extrudierten Block des Anschlussflansches 6 ist eine Nut 6c angeordnet, welche eine Seite des rechteckförmigen Halters 8 aufnimmt.

**Fig. 3** zeigt den Anschlussflansch 6 in einer anderen perspektivischen Sicht, und zwar mit Blick auf die Anschlussseite 6a für das nicht dargestellte Sammelrohr 3 und die Anschlussseite 6b mit einer Bohrung 9 für das nicht dargestellte Kältemittelrohr. In der Anschlussseite 6a ist eine weitere Bohrung 10 angeordnet, welche mit der rechtwinklig angeordneten Bohrung 9 einen Durchflusskanal für das Kältemittel bildet. Aus dieser Darstellung ist deutlich erkennbar, dass der Anschlussflansch 6 als Extrusionsteil herstellbar ist, in welches lediglich die beiden Bohrungen 9, 10 eingebracht werden müssen.

**Fig. 4** zeigt den Anschlussflansch 6 in einer Seitenansicht, in welcher auch das Sammelrohr 3 (vgl. Fig. 1) gestrichelt dargestellt ist. Der Anschlussflansch 6 weist zwei Anlageflächen 11, 12 auf, welche am Umfang des Sammelrohres 3 anliegen und somit Lötflächen für eine Lötverbindung bilden. Die Kältemittelverbindung zwischen den Bohrungen 9, 10 (vgl. Fig. 3) und dem Inneren des Sammelrohres 3 ist hier nicht dargestellt, sie ist aus dem eingangs genannten Stand der Technik bekannt. Der Halter 8 ist - wie oben erwähnt - in den Schlitz 6c eingesetzt, welcher von einer seitlichen Lippe 6d begrenzt wird. Mittels dieser Lippe 6d wird der Halter 8d im Schlitz 6c verstemmt, d. h. derart fixiert, dass er seine Position während des Lötprozesses beibehält. Da der Anschlussflansch 6 aufgrund der Extrusion nicht mit Lot plattiert werden kann, sind Sammelrohr 3 und Halter 8 lotplattiert. Somit können der gesamte Kondensator 1 einschließlich Sammelrohr 3, Anschlussflansch 6 und Halter 8 in einem Arbeitsgang in einem nicht dargestellten Lötofen gelötet werden. Damit besteht zwischen Halter 8 und Sammelrohr 3 nach dem Löten eine feste Verbindung, sodass der Kondensator 1 über den Halter 8 im Fahrzeug bzw. am Kühler befestigt werden kann. Gleiches gilt für den Anschlussflansch 7 mit Halter 9.

Der oben beschriebene Kondensator stellt ein mögliches Ausführungsbeispiel der Erfindung dar; andere Ausführungsformen liegen im Bereich der Ansprüche.

## Patentansprüche

1. Kondensator für Klimaanlagen von Kraftfahrzeugen mit einem Rohr/Rippen-Block (2) und mindestens einem mit den Rohren kommunizierenden Sammelrohr (3) mit mindestens einem Anschlussflansch und mit mindestens einem Halter zur Befestigung des Kondensators an einem Kühlmittelkühler, wobei der mindestens eine Anschlussflansch (6, 7) am Sammelrohr (3) befestigt ist, **dadurch gekennzeichnet, dass** der mindestens eine Halter (8, 9) am Anschlussflansch (6, 7) befestigt ist.

2. Kondensator nach Anspruch 1, **dadurch gekennzeichnet, dass** der mindestens eine Artschlussflansch (6) einen Schlitz (6c) aufweist, in welchen der Halter (8) eingesetzt ist.

3. Kondensator nach Anspruch 2, **dadurch gekennzeichnet, dass** der Halter (8) in dem Schlitz (6c) verstemmt und anschließend mit dem Anschlussflansch (6) verlötet ist.

4. Kondensator nach Anspruch 1, 2 oder 3, **dadurch gekennzeichnet, dass** der Anschlussflansch (6) und der Schlitz (6c) durch Extrudieren hergestellt sind.

5. Kondensator nach Anspruch 3 oder 4, **dadurch gekennzeichnet, dass** neben dem Schlitz (6c) eine Lippe (6d) ausgeformt ist, die gegen den Halter (8) verstemmt und anschließend mit ihm verlötet ist.

6. Kondensator nach einem der Ansprüche 1 bis 5, **dadurch gekennzeichnet, dass** der Halter als flaches Stanzteil (8) ausgebildet ist.

## Claims

1. Condenser for motor vehicle air-conditioning units, with a tube/fin block (2) and at least one collector tube (3) that communicates with the tubes, which has at least one connection flange and at least one holder for fixing the condenser onto a coolant radiator, the said at least one connection flange (6, 7) being attached to the collector tube (3), **characterised in that** the at least one holder (8, 9) is attached to the connection flange (6, 7).

2. Condenser according to Claim 1, **characterised in that** the at least one connection flange (6) has a slot (6c) in which the holder is inserted.

3. Condenser according to Claim 2, **characterised in that** the holder (8) is wedged into the slot (6c) and then soldered to the connection flange (6).

4. Condenser according to Claims 1, 2 or 3, **characterised in that** the connection flange (6) and slot (6c) are produced by extrusion.

5. Condenser according to Claims 3 or 4, **characterised in that** adjacent to the slot (6c) a lip (6d) is formed, which abuts against the holder (8) and is then soldered to the latter.

6. Condenser according to any of Claims 1 to 5, **characterised in that** the holder is made as a flat, stamped component (8).

## Revendications

1. Condenseur pour systèmes de climatisation de véhicules automobiles comprenant un bloc de tubes / d'ailettes (2) et au moins un tube collecteur (3) communiquant avec les tubes, comprenant au moins une bride de raccordement et au moins un élément de fixation servant à fixer le condenseur sur un radiateur de liquide de refroidissement, où la bride de raccordement (6, 7) au moins au nombre de un est fixée sur le tube collecteur (3),
**caractérisé en ce que** l'élément de fixation (8, 9) au moins au nombre de un est fixé sur la bride de raccordement (6, 7).

2. Condenseur selon la revendication 1, **caractérisé en ce que** la bride de raccordement (6) au moins au nombre de un présente une fente (6c) dans laquelle est introduit l'élément de fixation (8).

3. Condenseur selon la revendication 2, **caractérisé en ce que** l'élément de fixation (8) est maté dans la fente (6c) et, ensuite, brasé avec la bride de raccordement (6).

4. Condenseur selon l'une des revendications 1, 2 ou 3, **caractérisé en ce que** la bride de raccordement (6) et la fente (6c) sont fabriquées par extrusion.

5. Condenseur selon la revendication 3 ou 4, **caractérisé en ce qu'**une lèvre (6d) est formée à proximité de la fente (6c), lèvre qui est matée contre l'élément de fixation (8) et, ensuite, brasée avec lui.

6. Condenseur selon l'une quelconque des revendications 1 à 5, **caractérisé en ce que** l'élément de fixation est configuré comme une pièce découpée (8) plate.
